# EUROPEAN PATENT SPECIFICATION

(11) **EP 3 729 951 B1**
(45) Date of publication and mention of the grant of the patent: **18.05.2022**
(21) Application number: 19170687.8
(22) Date of filing: 23.04.2019
(51) Int. Cl.: A01F 15/08

(54) **COOLING OF AN AGRICULTURAL BALER**
KÜHLUNG EINER LANDWIRTSCHAFTLICHEN BALLENPRESSE
REFROIDISSEMENT D'UNE RAMASSEUSE-PRESSE AGRICOLE

(43) Date of publication of application: 28.10.2020
(73) Proprietor: CNH Industrial Belgium N.V., 8210 Zedelgem (BE)
(72) Inventor: Bonte, Xavier G.J.M., 4505 PB Zuidzande (NL); Gervoyse, Brecht, 9850 Landegem (BE); Lippens, Christiaan A.C., 9980 Sint-Laureins (BE)
(74) Representative: CNH Industrial IP Department

(56) References cited:
- WO-A1-2014/170318
- WO-A1-2016/005316
- US-A- 3 942 505
- US-A- 4 644 739
- US-A1- 2003 208 996

## Description

### TECHNICAL FIELD

The present invention relates to an agricultural baler and, in particular, to an agricultural baler having a cooling circuit for cooling an operating fluid, e.g. oil, of an operating component, e.g. gearbox, of the agricultural baler. Aspects of the invention relate to an agricultural baler and to a cooling circuit for use in the agricultural baler.

### BACKGROUND

Most agricultural balers do not have their own engine, or other power source, but are instead towed by a tractor and powered by coupling a power take-off (PTO) device or shaft of the tractor to an input shaft of the baler. Such balers often have a flywheel connected to the input shaft, and a gearbox that drives the various mechanisms in the baler to pick-up crop from a field, to form the crop into bales and to wrap twine and/or foil around the bales. A one-way clutch is typically arranged between the PTO shaft and the flywheel to allow the flywheel to rotate faster than the PTO shaft. The baler input shaft can be operatively decoupled from the tractor PTO, e.g. for transportation of the baler from one field to another.

In the gearbox there is lubricating oil that heats up during operation of the baler. In certain cases the temperature of the oil rises to a point at which it needs to be cooled to guard against over-heating of the oil or the gearbox itself, which could cause damage to the gearbox.

It is known to provide a radiator to cool the oil in the gearbox; however, this suffers the disadvantages of being relatively expensive, being at risk of plugging thereby reducing effectiveness, and that there is a need to provide power to drive the radiator fan, e.g. electrical or hydraulic power.

Also, the provision of a standard metal cooling tube or line is not normally sufficient to provide an adequate cooling effect to hot oil flowing therethrough as it is unlikely to have sufficient wind blowing across it to cool the oil.

US Patent No. 4644739 discloses an agricultural baler having a pick-up for picking up crop. The picked up crop is fed rearwardly from the pick-up into a compression chamber in which the crop is compressed into a high density bale by a compression member. The baler includes a shaft driven via a hydraulically operated torque limiting clutch. The shaft is connected to an output member of the clutch whilst an input member of the clutch, which comprises a clutch body, is connected to a flywheel and a sprocket which is driven by a chain from a further sprocket rotated by a shaft driven by a gearbox which is driven by a universally jointed shaft by a convention power take off shaft. The baler includes an oil cooler for hydraulic fluid, and a pump which is driven by a chain drive from the input shaft of the gearbox. Suitable hydraulic fluid lines extend between the pump, reservoir and hydraulic rams of the arrangement.

It is an aim of the present invention to address one or more disadvantages associated with the prior art.

### SUMMARY OF THE INVENTION

According to an aspect of the invention there is provided an agricultural baler. The baler comprises a rotatable shaft, e.g. an input shaft, a flywheel operatively connected to the shaft, and an operating component, e.g. a transmission. The baler includes a cooling circuit arranged to permit flow of operating fluid therethrough. The cooling circuit is arranged to permit flow of the operating fluid away from and back towards the operating component.

The cooling circuit has a cooling section through which the operating fluid flows after flowing away from the operating component and prior to flowing back towards the operating component. The cooling section is positioned adjacent to the flywheel so that rotation of the flywheel generates airflow across the cooling section to cool the operating fluid.

Agricultural balers often have relatively large flywheels, particularly in so-called 'large square balers' or 'high-density balers', to overcome peak loads encountered by the baler gearbox, which occurs for example when a plunger of the baler compresses crop material in a bale chamber when forming the bales. As such, the relatively large flywheels generate significant airflow when they rotate during operation of the baler, and therefore provide a significant cooling effect on the operating fluid in the cooling section close to the flywheel. By 'adjacent to' is meant that the cooling section may be partially or wholly positioned in front of, behind, or generally around the flywheel, or a combination of these. The cooling section is also necessarily partially or wholly close enough to the flywheel to experience airflow generated by rotation of the flywheel so as to benefit from a cooling effect. Note that the level of generated airflow may vary in dependence on the specific operation of the baler, e.g. the speed at which the baler is travelling. The cooling effect on the cooling section therefore may vary under different operating conditions, and there may be zero or minimal cooling effect under certain operating conditions.

The operating component may be any suitable component that has or uses an operating fluid that needs to be cooled during operation. For example, the operating component may be a gearbox or transmission of the baler. Alternatively, or in addition, the operating component may be a hydraulic system of the baler. The operating fluid may be oil, or any other heated liquid, e.g. lubricating fluid, that is used by a component of the baler. Note that 'operating fluid' may also include a dedicated coolant that flows through the cooling circuit, where the cooling circuit passes through or adjacent to the operating component, but where the operating fluid is not used by the operating component for any purpose other than cooling, e.g. lubrication.

The present invention is advantageous in that it makes use of an airflow that is already generated by a flywheel as it rotates during normal operation of a baler. This is achieved by arranging at least part of a cooling section of a cooling circuit close enough to the flywheel to benefit from a cooling effect of the generated airflow. In particular, the improved cooling of the present invention needs no additional components to generate the cooling airflow, thereby saving on weight and cost, e.g. no components such as an electrical fan are needed to provide a cooling airflow. That is, cooling wind that is already generated by virtue of operation of the baler is blown over operating fluid to be cooled.

The cooling section may be located at a rear side of the flywheel opposite a front side at which the flywheel is operatively connected to the shaft. When the baler is operating and travelling in a forward direction, this forward motion combined with the rotation of the flywheel may generate a larger airflow in the vicinity to the rear of the flywheel than some other locations, and so positioning the cooling section here may advantageously increase the cooling effect provided by the flywheel on the cooling section. The generated airflow may be over, around and or through the cooling section.

The cooling section may form a pattern around an axis of rotation of the flywheel. The pattern may or may not be centred on this rotation axis.

The cooling section may extend around the axis of rotation of the flywheel a plurality of times. Advantageously, this increases the length of the cooling circuit, or overall cooling section surface area, that benefits from the cooling airflow generated by the flywheel, thereby increasing the overall cooling effect on the operating fluid.

The pattern may include at least one of a circular pattern, a spiral pattern, a helical pattern, and a wavy pattern.

An axial distance between the flywheel and the cooling section may vary along the cooling section.

The cooling section may not extend beyond a circumference of the flywheel in a radial direction. Advantageously, this provides a relatively compact cooling circuit arrangement, but may also ensure that all of the cooling section benefits from the cooling airflow generated by the flywheel, i.e. all of the cooling section is in a path of the generated airflow.

The flywheel may comprise an arrangement for generating airflow across the cooling section when the flywheel rotates. Advantageously, the provision of such an arrangement further increases the amount of airflow generated by rotation of the flywheel and so increases the overall cooling effect on the cooling section.

The arrangement may comprise a plurality of fins arranged to generate airflow in an axial direction or a radial direction relative to the flywheel.

The fins may be arranged azimuthally about a rotational axis of the flywheel. Optionally, the fins form a generally circular pattern.

The fins may be arranged on at least one of: a casting of the flywheel; a rear plate of the flywheel; the shaft; and, a flywheel shaft section at a rear side of the flywheel. The fins may be integrally formed with the flywheel, e.g. the rear plate, or alternatively, the fins may be separate parts that are mounted to the flywheel, e.g. the rear plate. The fins may form slots in the rear plate.

The arrangement may comprise holes in a rear plate of the flywheel.

The arrangement may comprise at least one of: a part of the flywheel having varying thickness so as to generate airflow across the cooling section when the flywheel rotates; and, one or more spokes of a casting of the flywheel that are shaped so as to generate airflow across the cooling section when the flywheel rotates.

The operating fluid may be a lubricating fluid for the operating component, e.g. oil. Alternatively, the operating fluid may be a dedicated coolant that does not have an additional function during operation of the operating fluid.

The operating component may be a transmission of the baler, e.g. a mid transmission or a mid gearbox. The shaft may comprise an input shaft and a transmission shaft operatively connected to the flywheel. The transmission may be arranged between the input shaft and the transmission shaft.

### BRIEF DESCRIPTION OF THE DRAWINGS

Embodiments of the invention will now be described by way of example with reference to the accompanying drawings, in which:
Figure 1 shows a schematic side view of an agricultural baler;
Figures 2(a) and 2(b) show side and perspective views, respectively, of a flywheel and cooling circuit of the baler of Figure 1 in an embodiment in which the cooling circuit forms a spiral pattern;
Figures 3(a) and 3(b) show side and perspective views, respectively, of a flywheel and cooling circuit of the baler of Figure 1 in an embodiment in which the cooling line forms a helical pattern;
Figures 4(a) and 4(b) shows perspective and front views of a flywheel of the baler of Figure 1 in an embodiment in which a rear plate of the flywheel comprises a number of fins forming an axial fan; and,
Figures 5(a) and 5(b) shows perspective and front views of a flywheel of the baler of Figure 1 in an embodiment in which a rear plate of the flywheel comprises a number of fins forming a radial fan.

### DETAILED DESCRIPTION

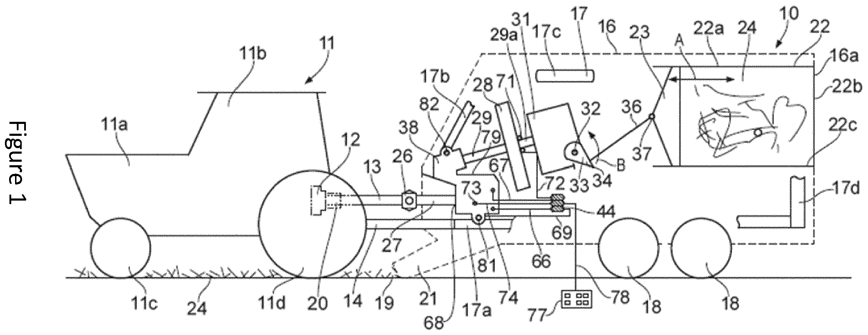

Figure 1 shows an example of an agricultural baler 10 being towed behind a towing vehicle in the form of an agricultural tractor 11. The tractor 11 includes a vehicle frame/body 11a and a rear-mounted cab 11b. The tractor 11 also includes front, steerable wheels 11c and rear, driven wheels 11d. The tractor 11 further includes a power take-off 12 that includes a rotatable coupling for a PTO shaft 13 that extends rearwardly of the tractor 11. The PTO 12 may be engaged to cause rotation of the PTO shaft 13, or disengaged such that the shaft 13 is not powered to rotate, for example through operation of a control lever or pushbutton. The tractor 11 may have any of a range of power outputs including, but not limited to, 200 hp, 300 hp and 400 hp. The baler 10 is operable when towed by any such tractor 11.

The PTO shaft 13 may be any of a variety of lengths. A relatively short PTO shaft 13 and drawbar 14 minimises the distance between the pick-up 19 of the baler 10 and the tractor 11. This provides certain advantages, although in some other respects a longer PTO shaft 13 may provide good adjustment flexibility. The baler 10 is secured to the rear of the tractor 11 by way of the drawbar 14, where the drawbar is pivotably secured to a conventional towing hitch at the rear of the tractor 11.

The partial driveline represented by the PTO 12 and the PTO shaft 13 may in various types of tractor include a PTO clutch 20 that as described above seeks to protect the engine of the tractor 11 from damage caused, e.g. when an excessive loading on the PTO shaft 13 causes engine stalling. The PTO clutch 20 is shown schematically in Figure 1. It may readily be envisaged by the person of skill in the art and typically would be a one-way clutch of a kind that permits free movement when rotating in one direction, and transfers rotary drive via the PTO shaft 13 when rotating in the opposite direction. Other forms and positions are possible in respect of the clutch 20.

The baler 10 has a housing 16 including a section 16a that is open to permit ejection of formed bales at the rear of the baler 10. The housing 16 is secured to a baler frame 17, which has parts 17a, 17b, 17c, 17d as illustrated in Figure 1. The baler 10 has two or more ground-engaging wheels 18 secured to the frame. A pick-up 19 projects forwardly of the baler 10 and is arranged to collect cut plant matter 24 from a field in which the baler 10 moves as driven by the tractor 11. The pick-up 19 passes the plant matter to a conveyor 21 which conveys the plant matter inside the baler 10. The baler 10 includes an internal bale-forming chamber 22 extending in a fore and aft direction and enclosed by the housing 16. In particular, the chamber 22 is elongate and defined by

The rear 22b of the chamber 22 coincides with the open housing section 16a in order to allow ejection of completed bales in a known manner. The forwardmost end of the bale-forming chamber 22 is essentially open. A plunger 23 occupies the interior cross-section of the camber 22 and is constrained to move longitudinally inside the chamber 22 from the open, forward end towards and away from the rear 22b of the chamber 22 as indicated by the arrow A.

The PTO shaft 13 is connected by way of at least one, and in practice at least two, universal joints 26 to the forwardmost end of a rotary input shaft 27 of the baler 10. The input shaft 27 connects by way of a driveline to a rotatable flywheel 28 that is supported on a transmission shaft 29. The input and transmission shafts 27, 29, which may be referred to simply as the shaft 27, 29, may be supported using journal bearings (not shown in Figure 1). The flywheel 28 is of relatively large diameter, e.g. 75-120 cm, and relatively large weight, e.g. 300-1000 kg, to obtain a high inertial mass or energy equivalent.

The rear end of the transmission shaft 29 is a rotary input to a drive converter 31 or similar transmission that by way of intermeshing gear components alters the axis of rotation of rotational energy in the baler 10. The driver converter 31 may be referred to herein as a main transmission or a main gearbox. The nature of the drive converter 31 is such that the longitudinally-extending axis of rotation of the transmission shaft 29 becomes rotation about a transversely-extending axis of a crankshaft 32. The crankshaft 32 is connected as shown to a crank member 33 that protrudes from the drive converter 31 in a manner presenting a free end 34. The free end is pivotably connected to one end of a rod 36 the other end of which is pivotably connected to, as indicated by numeral 37, to the forward side of the plunger 23. Rotation of the crankshaft 32 therefore causes rotation of the crank 33, as indicated by the arrow B, and this gives rise to the rectilinear, reciprocal motion of the plunger 23 indicated by the arrow A.

The driveline defined between the input shaft 27 and the transmission shaft 29 includes a transmission 38. The transmission 38 may also be referred to as the mid transmission or the mid gearbox. The rotary input shaft 27 connects to respective first and second selectable transmission ratios forming part of a driveline defined by driveline components within the transmission 38 and therefore existing between the input shaft 27 and the drive converter 31. The baler includes a controller in the form of a programmable microprocessor 44 that is capable of selectively engaging the first or second transmission ratio. The second transmission ratio may be a relatively small ratio transmission providing a higher speed of output shaft rotation than the first transmission ratio.

The baler 10 may include a brake (not shown) that may be employed when the transmission 38 is disengaged so as to slow the transmission shaft 29. The brake may be located in the driveline inside a housing 79. The transmission 38 may be controlled by the microprocessor 44 transmitting commands along the electrical control signal lines 66, 67. The baler 10 includes first and second rotational speed sensors 68, 71 for sensing the speed of the input shaft 27 and flywheel shaft section 29a, respectively, where the sensors 68, 71 then transmit a signal indicative of the sensed speed along respective electrical signal lines 69, 72 to the microprocessor 44. This may be used for detecting slip in the transmission 38.

The transmission 38 may use a wet clutch 38. In such an example, a clutch fluid flow circuit is provided. It is possible to sense the temperature of oil in the flow circuit and use this as an indication of clutch slip in the transmission 38. The baler 10 may therefore include one or more temperature sensors 73 connected to the microprocessor 44 via the electrical signal line 74. The temperature sensor 73 is arranged to measure the temperature of a fluid, such as the oil of a wet clutch, in a flow circuit forming part of the transmission 38.

The transmission 38 may include a rigid housing 79 formed from, for example, a metal alloy, especially a high stiffness, lightweight alloy. As mentioned above, the baler 10 has a number of frame elements 17. The housing 79 may be positioned to interconnect two or more such frame members, e.g. frame members 17a, 17b, in a manner that enhances the stiffness of the frame 17 of the baler 10. In the described example, such interconnection is achieved by way of perforated lugs 81, 82 by means of which the housing 79 is bolted to interconnect two frame members; however, such interconnection may be achieved in any appropriate way.

The baler 10 includes a cooling line arrangement (not shown in Figure 1), also referred to as a cooling circuit or cooling tube. Fluid, e.g. oil, from the transmission 38 is permitted to flow through the cooling circuit and provides a cooling effect to the oil. The cooling circuit is described in greater detail below.

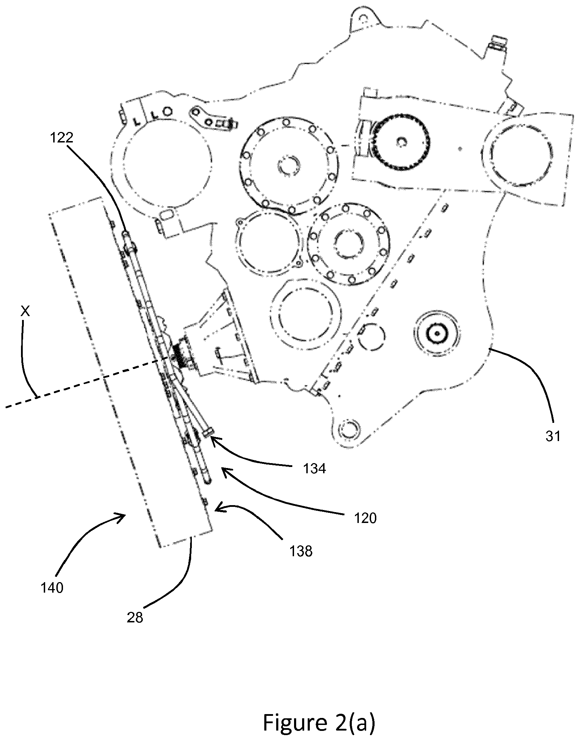

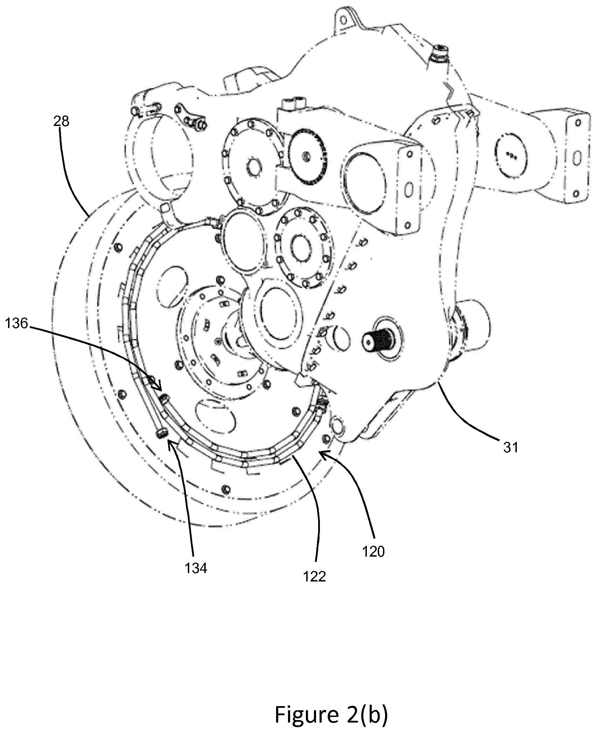

Figures 2(a) and 2(b) show side and perspective views, respectively, of the flywheel 28, cooling circuit 120 (according to an embodiment of the invention) and drive converter 31 of the baler 10. The cooling circuit 120 is in the form of an elongate metal tube. In the described example, the cooling circuit 120 is arranged to permit flow of oil from the transmission 38 therethrough. In particular, the cooling circuit 120 permits flow out of and back into the transmission 38. The cooling circuit 120 has a cooling section 122, defined as a section or part of the cooling circuit 120. In particular, oil flows out from the transmission 38, and then flows through the cooling section 122, before flowing back into the transmission 38. The ends 134, 136 of the cooling section 122 connect to respective output and input sections (not shown) of the cooling circuit 120 to permit flow of oil from the transmission 38 through the cooling section 122 and back to the transmission 38.

The cooling section 122 is mounted or positioned close or adjacent to the flywheel 28. That is, the cooling section 122 is positioned or mounted in the direct environment of the spinning flywheel 28. In particular, in the described embodiment the cooling section 122 is positioned adjacent to a rear side 138 of the flywheel 28, where the rear side 138 faces the drive converter 31. The rear side 138 is opposite to a front side 140 of the flywheel 28, where the driveline including the input shaft 27, the transmission shaft 29 and the transmission 38 positioned.

The cooling section 122 is mounted in a plane parallel to a plane of the flywheel 28, i.e. the plane perpendicular to the axis of rotation X of the flywheel 28. The cooling section 122 forms a pattern around the flywheel axis of rotation X. In particular, the cooling section 122 forms a pattern in which the cooling tube extends or wraps around the axis of rotation X more than once, in particular twice in the described embodiment; however, the cooling section 122 may extend around the axis X any number of times. Specifically, in the embodiment shown in Figures 2(a) and 2(b) the pattern is a spiral pattern around the axis of rotation X, that is, a circular pattern with a decreasing radius from the first end 134 to the second end 136 of the cooling section 122. It will be appreciated that the cooling section 122 may be defined as any appropriate part or section of the cooling circuit 120. In the described example the radius of the spiral pattern formed by the cooling section 122 is less than a radius of the flywheel 28; however, in different examples this need not be the case.

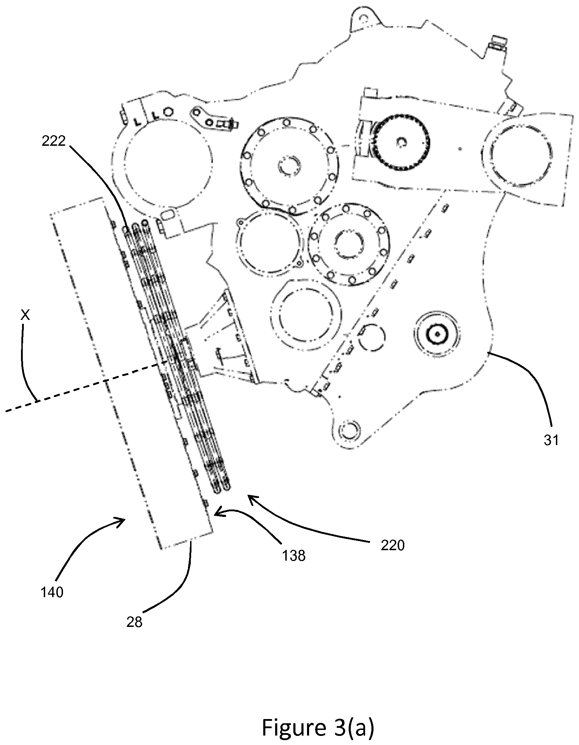

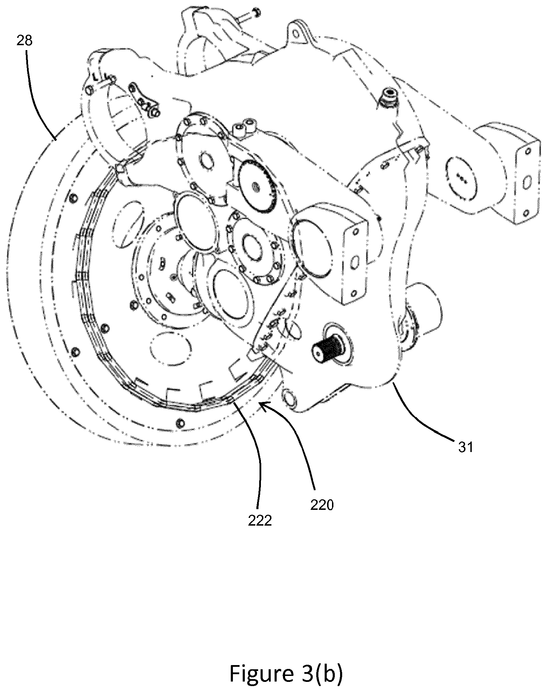

Figures 3(a) and 3(b) show side and perspective views, respectively, of the flywheel 28, cooling circuit 220 (according to a different embodiment of the invention from Figures 2(a) and 2(b)) and drive converter 31 of the baler 10. The cooling circuit 220 in the described embodiment is similar to the embodiment shown in Figures 2(a) and 2(b) except that the cooling section 222 is the described embodiment forms a helical pattern (rather than a spiral pattern). Like in the embodiment shown in Figures 2(a) and 2(b), in the described embodiment the cooling section 222 extends around the X axis a number of times; however, unlike in the embodiment shown in Figures 2(a) and 2(b), in the described embodiment the cooling section 222 is not mounted in a single plane parallel to a plane of the flywheel 28. Instead, in the described embodiment, a helix is formed from a plurality of circles of constant radius formed by the cooling tube and adjacent one another along the X axis. Of course, a helix pattern may be formed where the circles have a non-constant radius.

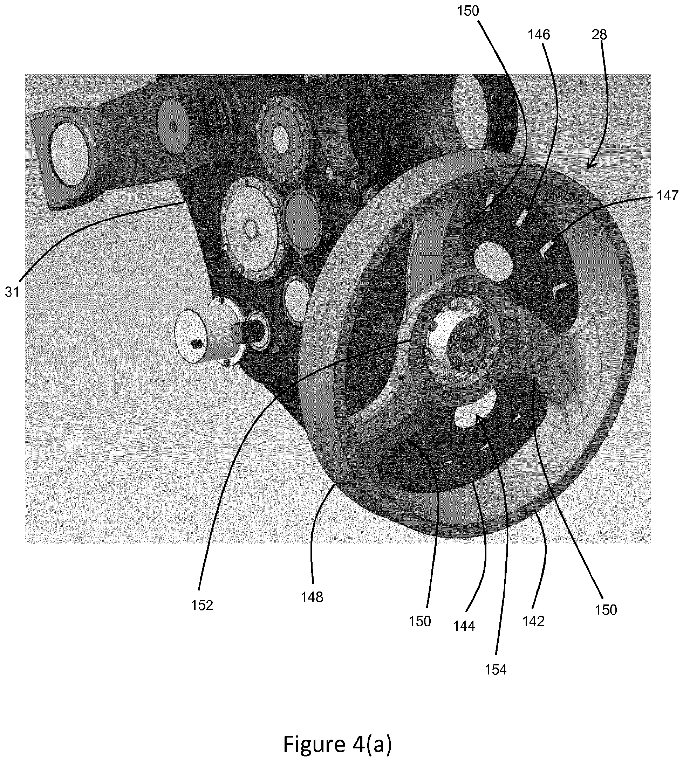

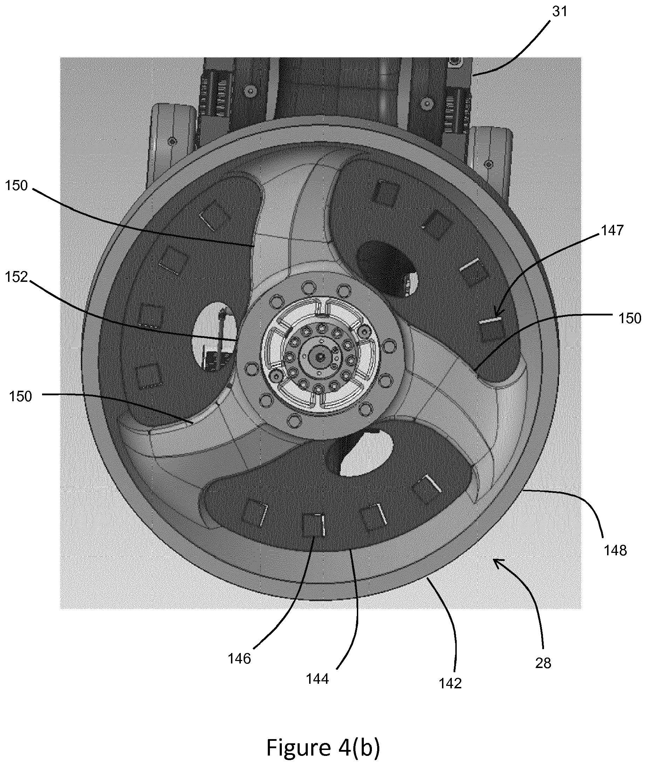

Figures 4(a) and 4(b) shows perspective and front views of the flywheel 28 and drive converter 31. The cooling circuit is not visible in Figures 4(a) and 4(b); however, the pattern formed by the cooling section may be either of those shown in Figures 2(a) and (b) or Figures 3(a) and (b), or may be any other suitable pattern. The flywheel 28 includes a casting 142 which forms a circumference of the flywheel 28. In particular, the casting 142 includes a circular outer ring 148 and three connecting spokes 150 connecting the outer ring 148 to a centre or inner ring 152 for coupling the flywheel 28 to the transmission shaft 29 (not shown in Figures 4(a) and 4(b)). The depth of the outer ring of the casting 142 is greater than its width in the radial direction. The casting may be formed from any suitable material for resisting changes in rotational speed by its moment of inertia, for example iron, lead alloys, aluminium, steel, ceramic, or any other suitable material.

The flywheel 28 may include a solid circular mounting plate or rear plate 144 that fills the gap formed by the outer ring 148 and the spokes 150 of the casting 142. The rear plate 144 is thinner along the X axis (not shown in Figures 4(a) and 4(b)) than the outer ring 148 of the casting 142. The rear plate 144 may include a number of fins 146, which may be regarded more generally as an arrangement of airflow generators 146. The fins 146 are arranged to increase the airflow generated by the flywheel 28 when the flywheel rotates during operation of the baler 10. In particular, the fins 146 may be arranged to generate airflow in a particular direction as the flywheel 28 rotates, so as to enhance the cooling capacity of the cooling circuit.

In the example shown in Figures 4(a) and 4(b), the fins 146 are wedge portions integrally formed with the rear plate 144 and forming slots or holes 147 in the rear plate 144. In the described embodiment, there are twelve fins 146 spaced apart in an azimuthal direction about the rotational axis X of the flywheel 28, and at constant radius from the rotational axis X; however, any suitable number of fins may be used, and they may form any suitable overall shape. That is, the fins 146 may form a circular pattern around the rotational axis X. The fins 146 are arranged so that the slots face in a tangential direction relative to the rotational axis X. This means that rotation of the flywheel 28 causes the fins 146 to act as an axial fan, i.e. the fins 146 generate airflow in a direction generally along the rotational axis X. The fins 146 may instead be arranged so that the slots face in a radial direction relative to the rotational axis X, either outwardly or inwardly. In this case, rotation of the flywheel 28 causes the fins 146 to act as a radial fan, i.e. the fins 146 generate airflow in a direction generally radially relative to the rotational axis X. The wedge sections formed by the fins extend towards the front side 140 of the flywheel 28; however, they may extend instead, or additionally, towards the rear side 138. Although the airflow generators 146 comprise slots and wedge-shaped fins in the example of Figures 4(a) and 4(b), in different embodiments an arrangement of airflow generators may not include the wedge-shaped fins and instead simply comprise the slots or holes 147 that create an airflow when the flywheel rotates. Note that the rear plate 144 in Figures 4(a) and 4(b) may include a number of further holes 154 that may be arranged and shaped to generate airflow across the cooling section 222 when the flywheel 28 rotates. The fins 246 are generally rectangular elements attached to the rear plate 144 of the flywheel 28.

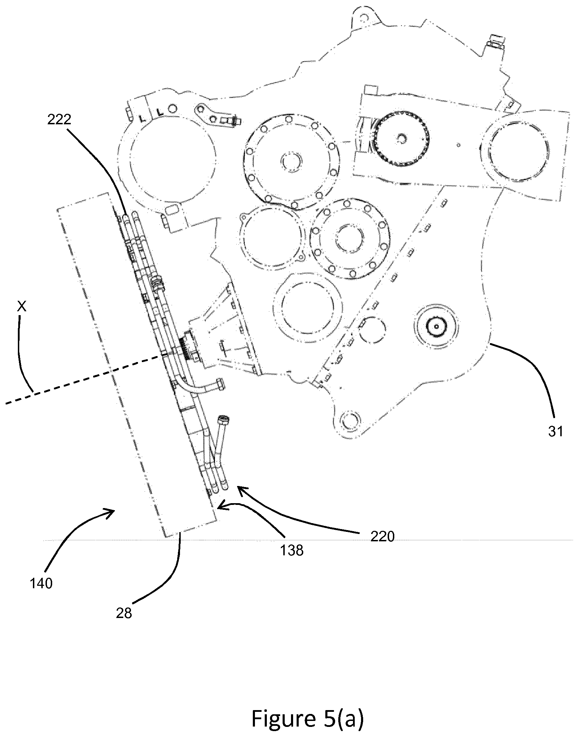

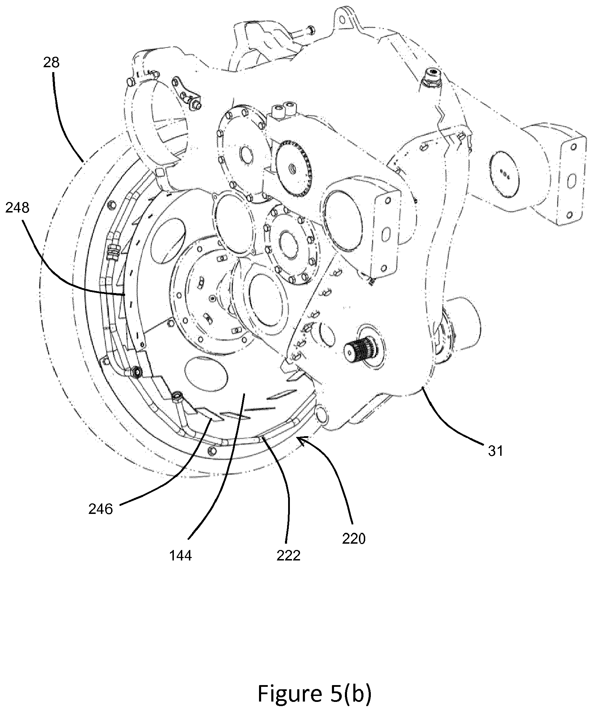

Figures 5(a) and 5(b) show side and perspective views, respectively, of the flywheel 28, the cooling circuit 220 having the cooling section 222, the drive converter 31, and an arrangement including a pattern of airflow generators 246 (according to a different example from the airflow generators of Figures 4(a) and 4(b)). The airflow generators 246 are in the form of fins shaped and angled to act as a radial fan. That is, as the flywheel 28 rotates, the fins 246 generate an airflow radially (outward) from the flywheel axis of rotation X. In the described example, the fins 246 are spaced apart in an azimuthal direction about the rotational axis X of the flywheel 28 to form a generally circular pattern, although any suitable pattern may be formed. Each of the fins 246 are angled relative to a tangent of the circle that they generally form. The fins 246 are located closer to the centre of the flywheel 28, i.e. the axis of rotation X, than the cooling section 222. In particular, the fins 246 form a generally circular arrangement having a smaller radius than the generally circular pattern formed by the cooling section 222. The fins 246 are adjacent to the cooling section 222 so that rotation of the flywheel 28 causes the fins 246 to generate airflow radially outwards across the cooling section 222. The arrangement on the flywheel 28 also includes a ring or guard 248, only half of which is shown in Figure 5(b) so as to better illustrate the fins 246. The ring 248 follows the pattern of the fins 246 around the centre of the flywheel 28 and is connected to the fins 246 at a side of the fins opposite to that which is attached to the rear plate 144. The ring 248 acts to further direct the airflow generated by the fins 246 in a radial direction to increase the level of generated airflow across the cooling section 222.

Many modifications may be made to the above-described embodiments without departing from the scope of the present invention as defined in the accompanying claims.

In the described embodiments, the pattern formed by the cooling section is a spiral or a helix; however, the pattern may be any other suitable pattern, for instance a circle, a combination of 'multiple S' shapes, a wavy pattern. Preferably, the pattern does not have sharp corners, which may restrict the flow of oil through the cooling section; however, patterns including corners or relatively sharp turns are within the scope of the invention.

In the described embodiments, the cooling section forms a pattern around the rotational axis or centre of the flywheel. In different embodiments, however, the cooling section need not extend around the rotational axis, and may instead simply extend past the rotational axis one or more times, e.g. to form a 'multiple S'-shaped pattern. It will be understood that any particular shape or pattern of cooling section that is adjacent to the flywheel is within the scope of the invention, provided that the cooling section experiences or benefits from airflow generated by the flywheel as it rotates during operation of the baler.

In the described embodiments, the cooling circuit provides cooling for the mid gearbox, i.e. the transmission 38 in Figure 1; however, in different embodiments, the cooling circuit may provide cooling to an operating fluid of any other component of the baler in which cooling is needed or desired. For instance, the cooling circuit may additionally or alternatively provide cooling to the drive converter of the baler, i.e. the component indicated by reference numeral 31 in Figure 1, and/or to any other gearbox of the baler. Furthermore, the cooling circuit may provide cooling to any component of the baler that may benefit from a cooling function. For instance, this may include any suitable electrical, mechanical (e.g. friction clutch) or pneumatic (e.g. compressor) component of the baler. Note that the component to be cooled does not necessarily need to include oil or other operating fluid for operation.

In the described embodiments, the fluid that flows through the cooling circuit is oil. In different embodiments, however, any suitable operating or lubricating fluid of the baler that would benefit from cooling, or is required to be cooled, may flow through the cooling circuit. Furthermore, the cooling circuit may be employed to provide cooling to one or more components of the baler that do not use oil or any other fluid for operation. In such a case, a dedicated coolant may circulate around the cooling circuit, where the cooling circuit passes through or adjacent to the component to be cooled and then flows through the cooling section of the cooling circuit adjacent to the flywheel.

In the described embodiments, there is a single cooling circuit providing cooling to a single component of the baler. In different embodiments, however, there may be a plurality of cooling circuits arranged adjacent to the baler flywheel each providing cooling to a different component of the baler. It is also possible that a single cooling circuit may provide cooling to a plurality of baler components.

In the above-described embodiments, the fins form slots, i.e. holes or gaps, which go through the rear plate; however, in different embodiments the fins need not be in form of slots that create holes in the rear plate. For example, in an embodiment in which the cooling section is adjacent to the rear side of the flywheel (as in the above-described embodiments) the fins may be integrally formed at a rear side of the rear plate, and shaped to generate airflow in a desired direction upon rotation of the flywheel. In general, the fins may be positioned one the front face and/or rear face of the rear plate, as required.

In the above-described embodiments, the fins 46 are integrally formed with the rear plate of the flywheel. In different embodiments, however, the fins may be formed as separate components or parts and mounted or otherwise attached to the rear plate. This may be beneficial for manufacturing considerations.

In the above-described embodiments, the fins are positioned on the rear plate of the flywheel; however, in different embodiments the fins may instead, or additionally, be positioned (integrally formed or mounted separately) on the casting of the flywheel, e.g. the outer circumference and/or the spokes, in dependence on the particular generated airflow that is desired based on the particular positioning of, and pattern formed by, the cooling section of the cooling circuit. Airflow generators, e.g. fins, may be additionally or alternatively be positioned on the transmission shaft (indicated by reference numeral 29 in Figure 1) and/or the flywheel shaft section (indicated by reference numeral 29a in Figure 1) of the baler.

In the above-described embodiments, the airflow generator arrangement comprises a number of fins. As mentioned above, however, the airflow generator arrangement may simply comprise a number of holes, slots or slits in a rear plate of the flywheel. Such holes may be of any suitable shape, for instance circular, oval, rectangular, triangular, or any other appropriate shape. In further different embodiments, an airflow generator arrangement may not be formed by discrete parts such as fins, but may instead be formed by a varying thickness of the rear plate, or other part, of the flywheel. In particular, the rear plate may have a thicker wall section at certain points that create and/or direct airflow when the flywheel rotates. Optionally, the spokes of the flywheel may be shaped in a specific way during casting so that they generate airflow across the cooling section of the cooling circuit when the flywheel rotates.

In the above-described embodiments, the cooling section is in the form of a single cooling tube that forms a pattern; however, in different embodiments, the cooling section may bifurcate into more than one tube to increase the overall surface area of the cooling section that is exposed to, or experiences, the generated airflow so as to increase the cooling effect. In such a case, the more than one tube may combine back into a single tube after the cooling section.

## Claims

1. An agricultural baler (10), comprising:
a rotatable shaft (27, 29);
a flywheel (28) operatively connected to the shaft (27, 29);
an operating component (38); and,
a cooling circuit (120, 220) arranged to permit flow of operating fluid therethrough, the cooling circuit (120, 220) being arranged to permit flow of the operating fluid away from and back towards the operating component (38),
wherein the cooling circuit (120, 220) has a cooling section (122, 222) through which the operating fluid flows after flowing away from the operating component and prior to flowing back towards the operating component, **characterised in that** the cooling section (122, 222) is positioned adjacent to the flywheel (28) so that rotation of the flywheel (28) generates airflow across the cooling section (122, 222) to cool the operating fluid.

2. An agricultural baler (10) according to Claim 1, wherein the cooling section (122, 222) is located at a rear side (138) of the flywheel (28) opposite a front side (140) at which the flywheel (28) is operatively connected to the shaft (27, 29).

3. An agricultural baler (10) according to Claim 1 or Claim 2, wherein the cooling section (122, 222) forms a pattern around an axis of rotation (X) of the flywheel (28).

4. An agricultural baler (10) according to Claim 3, wherein the cooling section (122, 222) extends around the axis of rotation (X) of the flywheel (28) a plurality of times.

5. An agricultural baler (10) according to Claim 3 or Claim 4, wherein the pattern includes at least one of a circular pattern, a spiral pattern, a helical pattern, and a wavy pattern.

6. An agricultural baler (10) according to any previous claim, wherein an axial distance between the flywheel (28) and the cooling section (122, 222) varies along the cooling section (122, 222).

7. An agricultural baler (10) according to any previous claim, wherein the flywheel (28) comprises an arrangement (146, 246) for generating airflow across the cooling section (122, 222) when the flywheel (28) rotates.

8. An agricultural baler (10) according to Claim 7, wherein the arrangement comprises a plurality of fins (146, 246) arranged to generate airflow in an axial direction or a radial direction relative to the flywheel (28).

9. An agricultural baler (10) according to Claim 8, wherein the fins (146, 246) are arranged azimuthally about a rotational axis (X) of the flywheel (28).

10. An agricultural baler (10) according to Claim 8 or Claim 9, wherein the fins (146, 246) are arranged on at least one of: a casting (142) of the flywheel (28); a rear plate (144) of the flywheel (28); the shaft (27, 29); and, a flywheel shaft section (29a) at a rear side (138) of the flywheel (28).

11. An agricultural baler (10) according to any of Claims 7 to 10, wherein the arrangement comprises holes (147, 154) in a rear plate (144) of the flywheel (28).

12. An agricultural baler (10) according to any of Claims 7 to 11, wherein the arrangement comprises at least one of: a part of the flywheel (28) having varying thickness so as to generate airflow across the cooling section (122, 222) when the flywheel (28) rotates; and, one or more spokes (150) of a casting (142) of the flywheel (28) that are shaped so as to generate airflow across the cooling section (122, 222) when the flywheel (28) rotates.

13. An agricultural baler (10) according to any previous claim, wherein the operating fluid is a lubricating fluid for the operating component (38).

14. An agricultural baler (10) according to any previous claim, wherein the operating component is a transmission (38) of the baler (10), wherein the shaft (27, 29) comprises an input shaft (27) and a transmission shaft (29) operatively connected to the flywheel (28), and wherein the transmission (38) is arranged between the input shaft (27) and the transmission shaft (29).

## Patentansprüche

1. Landwirtschaftliche Ballenpresse (10) mit:
einer drehbaren Welle (27, 29);
einem Schwungrad (28), das wirkend mit der Welle (27, 29) verbunden ist;
einer Betriebskomponente (38); und
einem Kühlkreislauf (120, 220), der dazu eingerichtet ist, einen Strom eines Betriebsfluids durch diesen zu ermöglichen, wobei der Kühlkreislauf (120, 220) dazu eingerichtet ist, einen Strom des Betriebsfluids von der Betriebskomponente (38) hinweg und zu dieser zurück zu ermöglichen,
wobei der Kühlkreislauf (120, 220) einen Kühlabschnitt (122, 222) aufweist, durch den das Betriebsfluid strömt, nachdem es von der Betriebskomponente hinweg strömt und bevor es zur Betriebskomponente zurück strömt,
**dadurch gekennzeichnet, dass**
der Kühlabschnitt (122, 222) neben dem Schwungrad (28) derart angeordnet ist, dass das Drehen des Schwungrads (28) einen Luftstrom über den Kühlabschnitt (122, 222) erzeugt, um das Betriebsfluid zu kühlen.

2. Landwirtschaftliche Ballenpresse (10) nach Anspruch 1, wobei der Kühlabschnitt (122, 222) an einer Rückseite (138) des Schwungrads (28) gegenüber einer Vorderseite (140), an der das Schwungrad (28) wirkend mit der Welle (27, 29) verbunden ist, angeordnet ist.

3. Landwirtschaftliche Ballenpresse (10) nach Anspruch 1 oder 2, wobei der Kühlabschnitt (122, 222) ein Muster um eine Drehachse (X) des Schwungrads (28) bildet.

4. Landwirtschaftliche Ballenpresse (10) nach Anspruch 3, wobei sich der Kühlabschnitt (122, 222) mehrfach um die Drehachse (X) des Schwungrads (28) erstreckt.

5. Landwirtschaftliche Ballenpresse (10) nach Anspruch 3 oder 4, wobei das Muster zumindest eines aus einem kreisförmigen Muster, einem spiralförmigen Muster, einem schraubenförmigen Muster und einem wellenförmigen Muster umfasst.

6. Landwirtschaftliche Ballenpresse (10) nach einem vorangehenden Anspruch, wobei ein axialer Abstand zwischen dem Schwungrad (28) und dem Kühlabschnitt (122, 222) entlang des Kühlabschnitts (122, 222) variiert.

7. Landwirtschaftliche Ballenpresse (10) nach einem vorangehenden Anspruch, wobei das Schwungrad (28) eine Anordnung (146, 246) zum Erzeugen eines Luftstroms über den Kühlabschnitt (122, 222) beim Drehen des Schwungrads (28) umfasst.

8. Landwirtschaftliche Ballenpresse (10) nach Anspruch 7, wobei die Anordnung eine Mehrzahl von Rippen (146, 246) umfasst, die dazu eingerichtet ist, einen Luftstrom in einer axialen Richtung oder einer radialen Richtung bezüglich des Schwungrads (28) zu erzeugen.

9. Landwirtschaftliche Ballenpresse (10) nach Anspruch 8, wobei die Rippen (146, 246) azimutal um eine Drehachse (X) des Schwungrads (28) angeordnet sind.

10. Landwirtschaftliche Ballenpresse (10) nach Anspruch 8 oder 9, wobei die Rippen (146, 246) angeordnet sind an zumindest einem aus: einem Gussteil (142) des Schwungrads (28), einer Rückplatte (144) des Schwungrads (28); der Welle (27, 29); und einem Schwungrad-Wellenabschnitt (29a) an einer Rückseite (138) des Schwungrads (28).

11. Landwirtschaftliche Ballenpresse (10) nach einem der Ansprüche 7 bis 10, wobei die Anordnung Öffnungen (147, 154) in einer Rückplatte (144) des Schwungrads (28) umfasst.

12. Landwirtschaftliche Ballenpresse (10) nach einem der Ansprüche 7 bis 11, wobei die Anordnung zumindest eines umfasst aus: einem Teil des Schwungrads (28) mit einer sich verändernden Dicke zum Erzeugen eines Luftstroms über den Kühlabschnitt (122, 222) beim Drehen des Schwungrads (28); und einer oder mehreren Speichen (150) eines Gussteils (142) des Schwungrads (28), die derart geformt sind, dass sie beim Drehen des Schwungrads (28) einen Luftstrom über den Kühlabschnitt (122, 222) erzeugen.

13. Landwirtschaftliche Ballenpresse (10) nach einem vorangehenden Anspruch, wobei das Betriebsfluid ein Schmiermittelfluid für die Betriebskomponente (38) ist.

14. Landwirtschaftliche Ballenpresse (10) nach einem vorangehenden Anspruch, wobei die Betriebskomponente ein Getriebe (38) der Ballenpresse (10) ist, wobei die Welle (27, 29) eine Eingangswelle (27) und eine Getriebewelle (29) umfasst, die wirkend mit dem Schwungrad (28) verbunden ist, und wobei das Getriebe (38) zwischen der Eingangswelle (27) und der Getriebewelle (29) angeordnet ist.

## Revendications

1. Presse à balles agricole (10), comprenant :
un arbre rotatif (27, 29) ;
un volant moteur (28) relié de manière fonctionnelle à l'arbre (27, 29) ;
un composant d'exploitation (38) ; et
un circuit de refroidissement (120, 220) agencé pour permettre l'écoulement d'un fluide de travail à travers celui-ci, le circuit de refroidissement (120, 220) étant agencé pour permettre l'écoulement d'un fluide de travail qui part et qui revient vers le composant d'exploitation (38),
dans laquelle le circuit de refroidissement (120, 220) comprend une section de refroidissement (122, 222) à travers laquelle le fluide de travail coule après s'être écoulé du composant d'exploitation et avant de s'écouler vers le composant d'exploitation,
**caractérisée en ce que**
la section de refroidissement (122, 222) se situe de manière adjacente par rapport au volant moteur (28) de sorte que la rotation du volant moteur (28) génère un flux d'air à travers la section de refroidissement (122, 222) pour refroidir le fluide de travail.

2. Presse à balles agricole (10) selon la revendication 1, dans laquelle la section de refroidissement (122, 222) se situe sur un côté arrière (138) du volant moteur (28) opposé à un côté avant (140) où le volant moteur (28) est relié de manière fonctionnelle à l'arbre (27, 29).

3. Presse à balles agricole (10) selon la revendication 1 ou la revendication 2, dans laquelle la section de refroidissement (122, 222) forme une configuration autour d'un axe de rotation (X) du volant moteur (28).

4. Presse à balles agricole (10) selon la revendication 3, dans laquelle la section de refroidissement (122, 222) s'étend une pluralité de fois autour de l'axe de rotation (X) du volant moteur (28).

5. Presse à balles agricole (10) selon la revendication 3 ou la revendication 4, dans laquelle la configuration comprend au moins une configuration en cercle, une configuration en spirale, une configuration hélicoïdale, et une configuration sinueuse.

6. Presse à balles agricole (10) selon l'une quelconque des revendications précédentes, dans laquelle une distance axiale entre le volant moteur (28) et la section de refroidissement (122, 222) varie le long de la section de refroidissement (122, 222).

7. Presse à balles agricole (10) selon l'une quelconque des revendications précédentes, dans laquelle le volant moteur (28) comprend un dispositif (146, 246) pour générer un flux d'air à travers la section de refroidissement (122, 222) lorsque le volant moteur (28) tourne.

8. Presse à balles agricole (10) selon la revendication 7, dans laquelle le dispositif comprend une pluralité d'ailettes (146, 246) agencées pour générer un flux d'air dans une direction axiale ou une direction radiale par rapport au volant moteur (28).

9. Presse à balles agricole (10) selon la revendication 8, dans laquelle les ailettes (146, 246) sont agencées de manière azimutale autour d'un axe de rotation (X) du volant moteur (28).

10. Presse à balles agricole (10) selon la revendication 8 ou la revendication 9, dans laquelle les ailettes (146, 246) sont agencées sur au moins : une coulée (142) du volant moteur (28) ; une plaque arrière (144) du volant moteur (28) ; l'arbre (27, 29) ; et, une section d'arbre du volant moteur (29a) sur un côté arrière (138) du volant moteur (28).

11. Presse à balles agricole (10) selon l'une quelconque des revendications 7 à 10, dans laquelle le dispositif comprend des trous (147, 154) dans une plaque arrière (144) du volant moteur (28).

12. Presse à balles agricole (10) selon l'une quelconque des revendications 7 à 11, dans laquelle le dispositif comprend au moins : une partie du volant moteur (28) d'une épaisseur variable de manière à générer un flux d'air à travers la section de refroidissement (122, 222) lorsque le volant moteur (28) tourne ; et un ou plusieurs rayons (150) d'une coulée (142) du volant moteur (28) formé(s) de manière à générer un flux d'air à travers la section de refroidissement (122, 222) lorsque le volant moteur (28) tourne.

13. Presse à balles agricole (10) selon l'une quelconque des revendications précédentes, dans laquelle le fluide de travail est un fluide lubrifiant pour le composant d'exploitation (38).

14. Presse à balles agricole (10) selon l'une quelconque des revendications précédentes, dans laquelle le composant d'exploitation est une transmission (38) de la presse à balles (10), dans laquelle l'arbre (27, 29) comprend un arbre d'entrée (27) et un arbre de transmission (29) reliés de manière fonctionnelle au volant moteur (28), et dans laquelle la transmission (38) est disposée entre l'arbre d'entrée (27) et l'arbre de transmission (29).
